Europäisches Patentamt

European Patent Office

Office européen des brevets

(19)

(11) EP 0 801 381 A1

(12) DEMANDE DE BREVET EUROPEEN

(43) Date de publication:
15.10.1997 Bulletin 1997/42

(51) Int Cl.⁶: $G11B\ 5/39$

(21) Numéro de dépôt: 97400513.4

(22) Date de dépôt: 06.03.1997

(84) Etats contractants désignés:
DE GB IT

(30) Priorité: 12.04.1996 FR 9604584

(71) Demandeur: SILMAG
38524 Saint-Egrève Cedex (FR)

(72) Inventeur: Lazzari, Jean-Pierre
38700 Corenc (FR)

(74) Mandataire: Dubois-Chabert, Guy et al
c/o BREVATOME
25, rue de Ponthieu
75008 Paris (FR)

(54) Tête magnétique horizontale à magnétorésistance perfectionnée

(57) La magnétorésistance (42) est très allongée et passe entre les pièces polaires ($36_1$, $36_2$).
Application à l'enregistrement magnétique.

FIG. 2

EP 0 801 381 A1

## Description

### Domaine technique

La présente invention a pour objet une tête magnétique horizontale à magnétorésistance perfectionnée. Elle trouve une application dans l'enregistrement d'informations sur un support tel que disque, bande, etc...

### Etat de la technique antérieure

L'utilisation de magnétorésistances pour lire des informations inscrites magnétiquement sur un support est bien connue. En général, cette magnétorésistance est un ruban dont le plan est perpendiculaire au support. Ce ruban est placé entre deux pièces polaires verticales séparées par un entrefer.

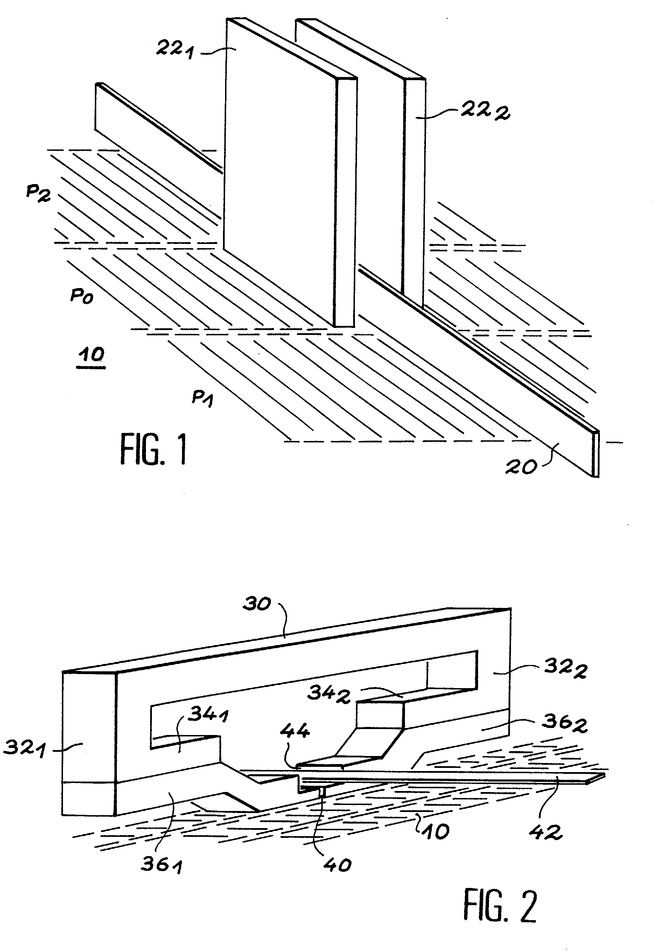

La figure 1 annexée illustre schématiquement cette technique. Sur un support 10 sont enregistrées des informations réparties sur des pistes P0, P1, P2. Près de ce support se déplace une tête comprenant une magnétorésistance 20 placée entre deux blindages magnétiques $22_1$, $22_2$.

L'élément magnétorésistant 20 est toujours plus large que la largeur de piste. Ainsi, lisant la piste P0, l'élément magnétorésistant est perturbé par les informations écrites sur les pistes adjacentes P1 et P2. Ce phénomène engendre du bruit dans le signal de lecture relatif à la piste P0.

Pour tenter d'éviter cet inconvénient, on dépose généralement sur la magnétorésistance, de chaque côté des blindages $22_1$, $22_2$, une couche conductrice, qui va court-circuiter l'élément magnétorésistant et réduire les variations de résistance induites par les pistes adjacentes et donc réduire le bruit.

Cependant, les champs magnétiques produits par les pistes adjacentes continuent d'exciter l'élément magnétorésistant. Si cette excitation n'induit que peu de bruit, elle perturbe néanmoins l'aimantation de la magnétorésistance entre les blindages par entraînement magnétique. Afin d'éliminer ce phénomène, on dépose des couches magnétiques minces dures, espèces de petits aimants, destinées à produire sur la partie de la magnétorésistance située entre les pièces magnétiques, un champ parallèle à la grande longueur de la magnétorésistance. Ce champ va donc stabiliser les domaines magnétiques de la magnétorésistance, et le signal de lecture gagnera en pureté.

Si la technique du court-circuit est assez simple à mettre en oeuvre, l'optimisation des couches magnétiques est, elle, très délicate. D'abord ces couches vont évoluer dans le temps. Ensuite, si les champs de fuite de ces couches doivent être suffisants pour stabiliser les domaines de la magnétorésistance, ils ne doivent pas être trop forts au point de perturber l'information enregistrée sur le support.

Le but de l'invention est justement de remédier à ces inconvénients.

### Exposé détaillé de l'invention

L'invention propose une solution à ce problème technique dans le cadre des têtes magnétiques horizontales (dites encore planaires). Ces têtes sont réalisées selon une technologie qui emprunte à la microélectronique, avec des couches déposées sur un substrat, généralement en silicium. De telles têtes sont décrites par exemple dans le document FR-A-2 645 314 (ou son correspondant américain US-A-5,208,716).

Ces têtes comprennent un circuit magnétique constitué, notamment, de deux pièces polaires séparées par un entrefer. La magnétorésistance est placée au voisinage de l'entrefer et est orientée parallèlement au plan du support (et non plus perpendiculairement). Selon l'invention, le ruban constituant la magnétorésistance présente une longueur très supérieure à sa largeur, en pratique plus de six fois la largeur. Ce ruban est placé en travers du circuit magnétique, et possède une partie centrale disposée dans un logement en forme d'échancrure pratiquée dans les pièces polaires ; les deux parties latérales sont disposées de chaque côté du circuit magnétique et sont recouvertes de contacts conducteurs.

Comme on le comprendra mieux par la suite, la zone centrale se trouve couplée magnétostatiquement aux pièces polaires, ce qui diminue le champ démagnétisant et permet à l'aimantation de tourner facilement en fonction du champ de lecture. Mais, dans les zones latérales, l'aimantation est quasiment bloquée selon la grande dimension de la magnétorésistance en raison du fort champ démagnétisant résultant de la forme très allongée de la magnétorésistance.

On obtient donc un double effet, à savoir, d'une part, le blocage de l'aimantation de chaque côté des pièces polaires, (ce qui rend la magnétorésistance insensible aux champs perturbateurs produits par les pistes adjacentes), et, d'autre part, une bonne orientation dans la zone centrale entre les pièces polaires avec une grande sensibilité. Ce double résultat est obtenu sans le secours de couches magnétiques jouant le rôle d'aimants.

### Brève description des dessins

- la figure 1, déjà décrite, montre une magnétorésistance selon l'art antérieur ;
- la figure 2 illustre une tête magnétique selon l'invention ;
- la figure 3 montre la magnétorésistance en vue de dessus ;
- la figure 4 montre l'aimantation dans la magnétorésistance ;
- la figure 5 montre, en coupe, l'échancrure dans laquelle est logée la magnétorésistance ;
- la figure 6 montre les trois zones composant la magnétorésistance.

**Exposé détaillé d'un mode de réalisation**

La tête représentée sur la figure 2 comprend un circuit magnétique qui, dans la variante illustrée, est constitué par une pièce magnétique arrière 30, deux piliers $32_1$, $32_2$, deux concentrateurs $34_1$, $34_2$, et deux pièces polaires $36_1$, $36_2$ séparées par un entrefer 40. L'enroulement d'écriture n'a pas été représenté. S'il existe, pour une tête servant aussi bien à l'écriture qu'à la lecture, il entoure les piliers $32_1$, $32_2$.

L'élément de lecture est constitué par une magnétorésistance 42 qui peut être soit une magnétorésistance classique, soit une magnétorésistance multicouche, dite encore magnétorésistance géante. Cet élément est très allongé, c'est-à-dire que sa longueur est supérieure à environ quatre fois, voire six fois, sa largeur. La magnétorésistance passe entre les pièces polaires, grâce à une échancrure 44 pratiquée dans celles-ci.

La magnétorésistance 42 est éloignée du support d'enregistrement 10 d'une distance comprise entre environ 0,5 et 5 micromètres. Sa largeur est typiquement comprise entre environ 0,5 et environ 3 micromètres. Cette largeur est donc beaucoup plus grande que l'intervalle séparant deux éléments d'information sur une piste d'enregistrement. De chaque côté des pièces polaires, la magnétorésistance recouvre donc plusieurs éléments d'informations successifs sur des pistes adjacentes. Elle ne reçoit donc qu'un champ faible à l'extérieur des pièces polaires.

La situation est naturellement bien différente entre les pièces polaires où l'entrefer a une longueur (comptée dans le sens de la piste) voisine d'un élément d'information enregistré sur la piste.

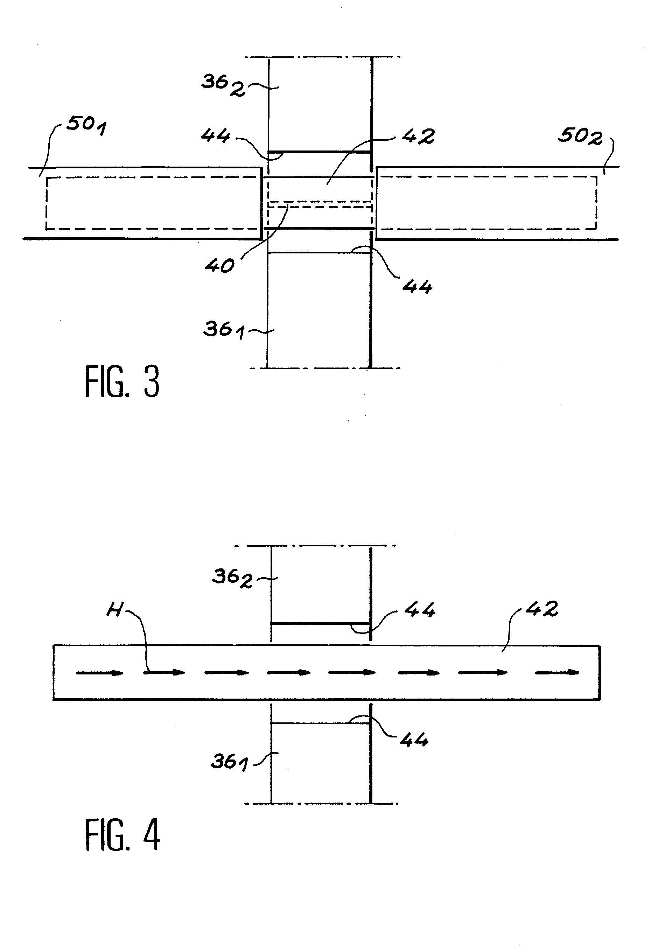

Bien que la magnétorésistance reçoive un champ très faible sur ses parties latérales, on peut recouvrir ces parties de métal pour court-circuiter ces parties. Mais l'essentiel de l'invention tient dans les moyens de stabilisation des domaines magnétiques. Le fonctionnement de ces moyens est illustré par les figures 3 à 6.

Sur la figure 3, tout d'abord, on voit, en vue de dessus, et côté magnétorésistance, l'extrémité des deux pièces polaires $36_1$, $36_2$ avec une échancrure 44 pratiquée dans ces deux pièces pour permettre le passage du ruban magnétorésistant 42. Les deux zones latérales de la magnétorésistance sont recouvertes de contacts métalliques $50_1$, $50_2$, par exemple en AlSiCu, matériau conducteur utilisé en microélectronique. Ces contacts $50_1$, $50_2$ servent non seulement à court-circuiter les extrémités de la magnétorésistance mais aussi à assurer la connexion avec le circuit de mesure de la résistance du ruban.

La figure 4 est analogue à la figure 3 si ce n'est que les contacts $50_1$, $50_2$ ont été omis pour plus de clarté. Dans le ruban magnétorésistant 42, l'aimantation H est dirigée selon la grande dimension, à supposer qu'aucun champ de lecture ne soit appliqué. Du fait de la très forte anisotropie de forme (facteur supérieur à 6), il existe un champ démagnétisant intense dans le sens de la largeur, de sorte que l'aimantation aurait beaucoup de mal à tourner et à s'incliner si l'on appliquait un champ perpendiculaire à la grande dimension. Ainsi, les champs perturbateurs produits par les pistes adjacentes à la piste lue ne parviennent-ils pas à perturber l'aimantation des zones latérales, laquelle reste quasiment bloquée dans la direction longitudinale et ceci uniquement par le fait de l'anisotropie de forme.

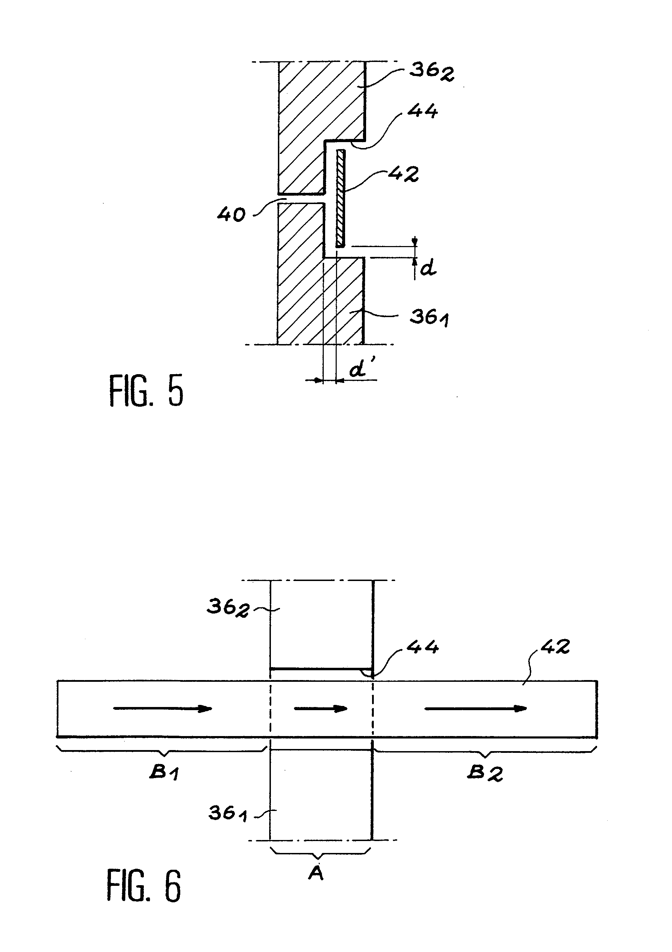

Cette immunité aux champs perturbateurs se retrouverait naturellement dans la zone centrale (puisque celle-ci présente la même forme que les zones latérales), si cette zone centrale était placée en espace libre comme les zones latérales. Mais, dans la zone centrale, la magnétorésistance est placée dans le logement 44 et se trouve donc très proche des pièces polaires lesquelles sont magnétiques. Le champ démagnétisant se trouve alors beaucoup plus faible dans la zone centrale. On voit mieux, sur la figure 5, le logement 44 dans lequel est placée la magnétorésistance. Ses bords sont séparés des pièces polaires par une distance d et sa surface est séparée du fond du logement d'une distance d'. Ces distances sont comprises entre 0,05 et 1 micromère. Le champ démagnétisant, qui présentait une valeur $H_D$ dans les zones latérales situées en espace libre, se trouve divisé dans la zone centrale d'un facteur C égal au coefficient de couplage magnétostatique. Ce couplage étant compris entre environ 2 et 10, selon les dimensions d et d', le champ démagnétisant tombe, dans la zone centrale, à une valeur comprise entre environ $H_D/10$ et $H_D/2$.

On comprend donc que la magnétorésistance ainsi montée comprend, conformément à la figure 6, une zone centrale A et deux zones latérales B aux propriétés très différentes :

- dans les zones latérales B, un champ extérieur $\vec{H}_{ext}$ ne pourra provoquer la rotation de l'aimantation dans la direction de la largeur que s'il est supérieur à la somme du champ démagnétisant $\vec{H}_D$ et du champ d'anisotropie $\vec{H}_K$ :

$$\vec{H}_{ext} > \vec{H}_D + \vec{H}_K$$

- dans la zone centrale A, la condition est la même mais le champ démagnétisant est C fois plus faible :

$$\vec{H}_{ext} > \vec{H}_D / C + \vec{H}_K$$

L'aimantation peut donc tourner beaucoup plus facilement dans la zone centrale lorsque celle-ci est soumise au champ de lecture provenant des pièces polaires.

Ainsi, sans le secours d'aimantations permanents, l'aimantation est-elle bloquée dans les zones latérales, tout en restant libre et sensible dans la zone centrale.

**Revendications**

1. Tête magnétique horizontale à magnétorésistance comprenant un circuit magnétique (30, $32_1$, $32_2$, $34_1$, $34_2$, $36_1$, $36_2$, 40) avec deux pièces polaires ($36_1$, $36_2$) séparées par un entrefer (40) et une magnétorésistance (42) placée à proximité de l'entrefer (40), cette tête étant caractérisée par le fait que la magnétorésistance est un ruban allongé s'étendant en travers du circuit magnétique, avec une zone centrale (A) disposée dans une échancrure (44) pratiquée dans les pièces polaires ($36_1$, $36_2$) et deux zones latérales (B1, B2) disposées de part et d'autre des pièces polaires ($36_1$, $36_2$).

2. Tête magnétique selon la revendication 1, caractérisée par le fait que le ruban constituant la magnétorésistance a une longueur supérieure à quatre fois sa largeur.

3. Tête magnétique selon la revendication 2, caractérisée par le fait que la magnétorésistance a une longueur supérieure à six fois sa largeur.

4. Tête magnétique selon la revendication 1, caractérisée par le fait que les zones latérales (B) de la magnétorésistance sont chacune recouvertes d'un contact conducteur ($50_1$, $50_2$).

5. Tête magnétique selon la revendication 1, caractérisée par le fait que les deux bords de la zone centrale (A) de la magnétorésistance sont séparés des pièces polaires ($36_1$, $36_2$) d'un intervalle (d) compris entre environ 0,05 et 1 micromètre.

FIG. 1

FIG. 2

FIG. 3

FIG. 4

FIG. 5

FIG. 6

Office européen
des brevets

**RAPPORT DE RECHERCHE EUROPEENNE**

Numero de la demande

EP 97 40 0513

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 018, no. 429 (P-1785), 10 Août 1994 & JP 06 131635 A (FUJITSU LTD), 13 Mai 1994, * abrégé; figures * | 1 | G11B5/39 |
| D,A | US 5 208 716 A (LAZZARI JEAN-PIERRE) 4 Mai 1993 * colonne 4, ligne 24 - ligne 33 * * colonne 4, ligne 55 - colonne 5, ligne 2 * * colonne 5, ligne 8 - ligne 16; figures 10-12 * | 1 | |
| A | EP 0 651 374 A (HEWLETT PACKARD CO) 3 Mai 1995 * colonne 5, ligne 41 - ligne 54 * * colonne 6, ligne 50 - colonne 7, ligne 5 * * colonne 7, ligne 9 - ligne 41 * * colonne 8, ligne 24 - ligne 29; figures 1,2,4 * | 1,4 | |
| | | | **DOMAINES TECHNIQUES RECHERCHES (Int.Cl.6)** |
| A | PATENT ABSTRACTS OF JAPAN vol. 017, no. 281 (P-1548), 31 Mai 1993 & JP 05 012626 A (HITACHI MAXELL LTD), 22 Janvier 1993, * abrégé; figure 9 * | 1 | G11B |
| A | PATENT ABSTRACTS OF JAPAN vol. 018, no. 042 (P-1680), 21 Janvier 1994 & JP 05 266439 A (TDK CORP), 15 Octobre 1993, * abrégé * | 1,4 | |

-/--

Le présent rapport a été établi pour toutes les revendications

| Lieu de la recherche | Date d'achèvement de la recherche | Examinateur |
|---|---|---|
| LA HAYE | 21 Juillet 1997 | Fux, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

8

EP 0 801 381 A1

## RAPPORT DE RECHERCHE EUROPEENNE

Office européen
des brevets

Numero de la demande
EP 97 40 0513

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO 90 11594 A (COMMISSARIAT ENERGIE ATOMIQUE) 4 Octobre 1990 * page 7, ligne 10 - ligne 26; figures 10,11 * | 1,5 | |
| A | PATENT ABSTRACTS OF JAPAN vol. 016, no. 003 (P-1294), 7 Janvier 1992 & JP 03 225612 A (NEC CORP), 4 Octobre 1991, * abrégé * | 1,4 | |
| A | PATENT ABSTRACTS OF JAPAN vol. 010, no. 045 (P-430), 21 Février 1986 & JP 60 191419 A (KANSAI NIPPON DENKI KK), 28 Septembre 1985, * abrégé * | | |
| A | EP 0 046 697 A (CII HONEYWELL BULL) 3 Mars 1982 * colonne 18, ligne 10 - ligne 34; figure 6 * | | DOMAINES TECHNIQUES RECHERCHES (Int.Cl.6) |

Le présent rapport a été établi pour toutes les revendications

| Lieu de la recherche | Date d'achèvement de la recherche | Examinateur |
|---|---|---|
| LA HAYE | 21 Juillet 1997 | Fux, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EP O FORM 1503 03.82 (P04C02)